# EUROPEAN PATENT APPLICATION

(11) **EP 1 393 944 A2**
(43) Date of publication of application: **03.03.2004**
(21) Application number: 03017682.0
(22) Date of filing: 14.08.2003
(51) Int. Cl.: B60J 7/02

(54) **Integrated wire harness attachments in sunroof guide channel frame**

(30) Priority: 27.08.2002 US 228561
(71) Applicant: ArvinMeritor Technology, LLC, Troy, MI 48084 (US)
(72) Inventor: Cooney, Daniel, Livonia, Michigan 48154 (US); Allan, Troy, Howell, Michigan 48843 (US); Long, John E., Highland, Michigan 48357 (US); Dayoup, Karim, Royal Oak, Michigan 48067 (US); Park, Hyong Chol, Ann Arbor, Michigan 48105 (US); Tice, Bryan, White Lake, Michigan 48383 (US)
(74) Representative: Kitzhofer, Thomas, Dipl.-Ing.

(57) **Abstract**

A movable panel assembly (10) includes a guide channel (48) having a mounting flange (46) and a tab (30) extending downward from the mounting flange (46). The tab (30) includes a barbed configuration that cooperates with clips (32) assembled to a corresponding wire harness (38). The clips (32) integrally assembled to the wire harness (38) attach and securely fasten the wire harness (38) to the guide channel (48).

## Description

### BACKGROUND OF THE INVENTION

This invention generally relates to a sunroof for a motor vehicle and specifically to a sunroof including a guide channel frame having integrally formed wire harness mounting features.

Typically, a sunroof or moonroof in a motor vehicle includes a movable panel slidable within channels between open and closed positions. Some movable panels include a fully opened position along with a vented position. In the vented position, the glass panel is pivoted upward to provide a small opening on one side of the panel. Movement of the panel is facilitated by a guide channel mounted to the motor vehicle. The guide channel typically includes a channel portion cooperating with a tab portion of the movable panel. The guide channel also includes a gutter portion that facilitates evacuation of water from the movable panel area so that water does not intrude into the passenger compartment of the motor vehicle.

Typically, an electric motor drives the movable panel between open and closed positions. A wire harness communicates electrical energy along with control signals to the motor in order to move the movable panel to the desired position. Multiple pieces of tape or clips secure the wire harness to the sunroof guide channel or frame. As appreciated, use of multiple pieces of tape or multiple separate clips complicates and increases the difficulty of assembling the movable panel to a motor vehicle.

Accordingly, it is desirable to design features within the guide channel to aid in assembly and mounting of a wire harness.

### SUMMARY OF THE INVENTION

An embodiment of this invention is a movable panel assembly including a guide channel having mounting features corresponding with mounting features integrally assembled to a wire harness.

The movable panel assembly of this invention includes a guide channel having a plurality of tabs extending from a mounting flange that cooperates with clips mounted on the wire harness. The clips correspond with the mounting tabs extending from the mounting flange of the movable panel guide channel.

Accordingly, embodiments of this invention improve the manufacturability of the sunroof assembly and increase the accuracy and dependability in which the wire harness is secured to the motor vehicle.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1 is a schematic view of the movable panel assembly incorporating the guide channels of this invention;
Figure 2 is a cross-sectional view of the movable panel assembly;
Figure 3 is a perspective view of one channel of the guide channel of this assembly;
Figure 4 is a perspective view of an another embodiment of the guide channel;
Figure 5 is a top view of the guide channel assembly;
Figure 6 is a cross-sectional view of the guide channel shown in Figure 4.

### DETAILED DESCRIPTION OF THE PREFERRED EMBODIMENT

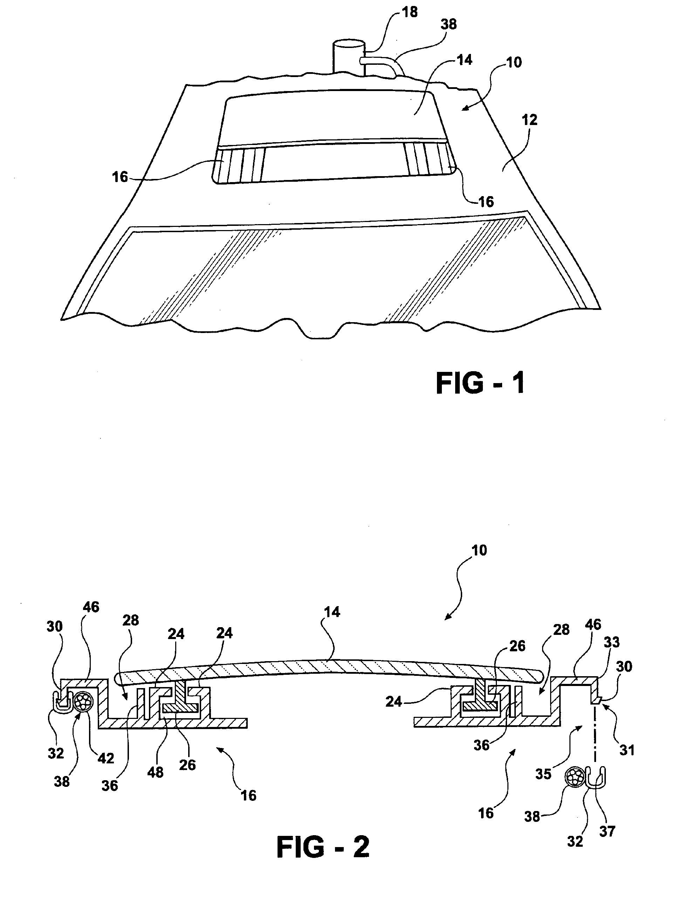

Figure 1 schematically shows a sunroof or panel assembly 10 installed in a motor vehicle 12. The panel assembly 10 includes a movable panel 14 slidable between open and closed positions within channels 16. Referring to Figure 2, a cross-sectional view is shown of the movable panel assembly 10. The movable panel assembly 10 includes the movable panel 14 having guide portions 26 disposed within a guide channel 48. The guide portions 26 extend downward from the movable panel 14 into each of the guide channel 48. The guide channel 48 includes overlapping fingers 24 that trap the guide portion 26 of the movable panel 14.

The movable panel 14 slides between open and closed positions within the guide channels 48. Each of the channels 16 include several portions, the guide channel 48, a gutter portion 28 and attachment flange 46 along with a mounting tab 30. The gutter portion 28 is formed by a wall 36. The wall 36 cooperates with the attachment flange 46 to form a gutter for water evacuation. The attachment flange 46 provides an attachment point for each of the channels 16.

The channels 16 includes the mounting or attachment flange 46 and a tab extending downward from the attachment flange 46. The tab 30 cooperates with clips 32 that are integrally formed and attached to an assembly called wire harness 38. The wire harness 38 includes multiple strands of wire 42 that communicate electrical energy and control signals to an electric motor 18.

The mounting tab 30 includes a flat portion 33 and a ramped portion 31 that form a barbed configuration that cooperates with a clip 32 attached to the wire harness 38. The clip 32 is moved in the direction of the arrow 35 to engage the tab 30 and secure the wire harness 38 to the channel 16. As appreciated, securing the wire harness 38 to the channel 16 in this manner eliminates the need for external and loose attachment devices as has been used in conventional wire harness assembly. Further, the tab 30 is an integral portion of the channel 16 eliminating a substantial amount of assembly and manufacturing steps.

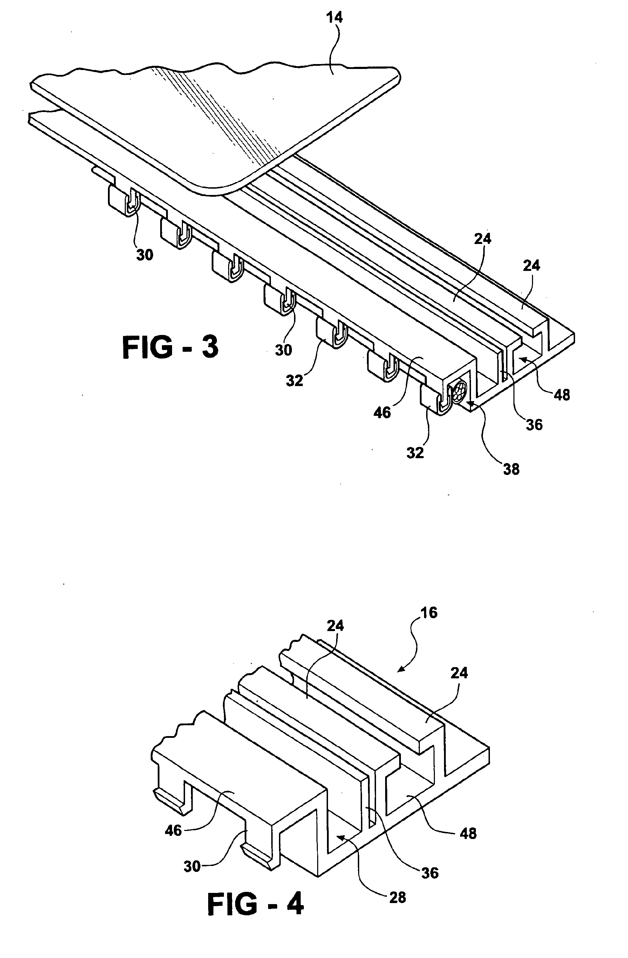

Referring to Figure 3, a perspective view showing the cross-section of a single channel 16 with a wire harness 38. In this view, the channel 48, gutter portion 28, and flange 46 are as an end view along with the multiple tab portions disbursed along the length of the channel 16. Note that in this embodiment each of the tabs 30 are intermittently arranged along the length of the channel 16. The tabs 30 are disposed in this manner and cooperate with the specific locations of clips 32 that are assembled to the wire harness 38. The clips 32 are preferably integrally assembled to the wire harness 38.

The movable panel 14 slides within the channel 48 between the open and closed positions. Assembly of the wire harness 38 is facilitated by engaging the plurality of clip already assembled to the wire harness 38 to corresponding tabs 30. Each of the clips 32 include a hook portion 37 (best shown in Figure 2) that engages the barbed tab 30. As appreciated, although a barbed tab 30 is shown in this embodiment, it is within the contemplation of this invention that any tab configuration or shape is as is known to a worker skilled in the art for securing a wire harness to a support structure would be within the contemplation of this invention.

Referring to Figure 4, the channel 16 includes a continuous tab 30 or rail extending along the entire length of the channel 16. Such a configuration would facilitate and eliminate the need to correspond positions of the wire harness with the discreetly located tabs 30.

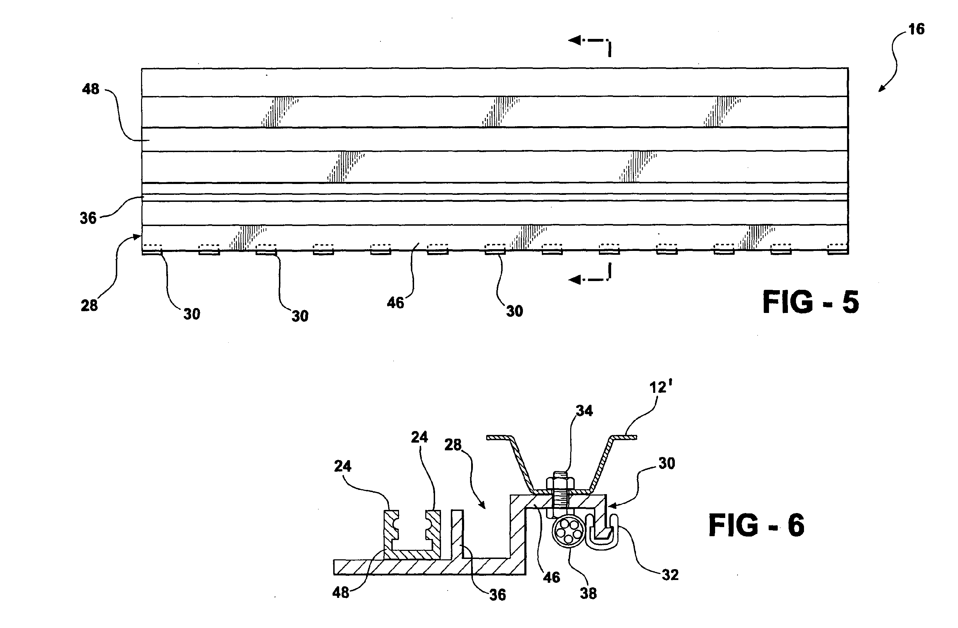

Referring to Figure 5, the channel 16 is shown in a plan view and includes the guide channel 48, the wall 36 that aids in forming the gutter portion 28 along with the flange 46. The tabs 30 extend downward from the flange 46 in discreet locations along the length of the channels 16.

Referring to Figure 6, the channel 16 includes the guide channel 48 having over extending fingers 24 for mounting of the tab portion of the movable panel 14 and sliding of the movable panel 14 between an open and closed position. The channel 16 also includes the wall 36 that extends upward from the channel 16 to form a gutter portion 28. The gutter portion 28 aids in the evacuation of water and moisture away from the sunroof or movable panel assembly 14. Next to the gutter portion 28 and extending horizontally is an attachment flange 46. The attachment flange 46 includes an opening through which a threaded fastener 34 extends for securing and mounting of the channel 16 to a body portion 12' of the motor vehicle. The threaded fastener 34 is preferably of the self-tapping configuration as is known by a worker skilled in the art. However, it should be understood that it is within the contemplation that the threaded fastener 34 may be replaced with any type of fastening member known to a worker skilled in the art.

Extending downward from the attachment flange 46 is the tab 30. The tab 30 includes the barbed portion or configuration that is formed by the ramped portion 31 and flat portion 33. The tab 30 may be of any configuration known to a worker skilled in the art and the barbed configuration shown in this embodiment is just one of the many configurations that may be utilized in this invention. Many different tab formations as are known to a worker skilled in the art fall within the contemplation of this invention.

The guide channels 48 are formed of extruding aluminum or formed by an injection molding process.

## Claims

1. A movable panel assembly for a vehicle comprising;
a panel movable between open and closed positions;
a wire harness assembly;
a guide channel for guiding said panel between said open and closed positions, said guide channel including a tab section corresponding to clips disposed on said wire harness assembly for mounting said wire harness to said guide channel.

2. The assembly of claim 1, wherein said guide channel includes a flange, and said tab section is disposed on a distal end of said flange.

3. The assembly of claim 1 or 2, wherein said clips are secured to said wire harness such that said clips are an integral part of said wire harness.

4. The assembly according to any of the preceding claims, wherein a plurality of said tab section extends downward from said flange at common intervals.

5. The assembly according to any of the preceding claims, wherein said tab section is a continuous section extending along said channel.

6. The assembly according to any of the preceding claims, wherein said flange includes an opening through which a fastener extends for securing said guide channel to said vehicle.

7. The assembly according to any of the preceding claims, wherein said tab section is hook shaped.

8. The assembly according to any of the preceding claims, wherein said tab section extends transversely from said flange.

9. The assembly according to any of the preceding claims, wherein said tab section includes a ramped portion terminating at a flat portion disposed transverse to said ramped portion.

10. The assembly according to any of the preceding claims wherein said guide channel is formed of extruding aluminum or by an injection molding process.

11. The assembly according to any of the preceding claims, wherein the clips and the wire harness define a pre and integrally assembled unit.
